Europäisches Patentamt

(19) European Patent Office

Office européen des brevets

(11) EP 0 626 360 B1

(12) **FASCICULE DE BREVET EUROPEEN**

(45) Date de publication et mention
de la délivrance du brevet:
**13.08.1997 Bulletin 1997/33**

(51) Int. Cl.⁶: **C04B 35/80**, C04B 35/52,
C04B 35/83

(21) Numéro de dépôt: 94401135.2

(22) Date de dépôt: 24.05.1994

(54) **Procédé de fabrication d'un matériau composite à interphase en carbone pyrolytique de microtexture lamellaire entre fibres de renfort et matrice, et matériau tel qu'obtenu par le procédé**

Verfahren zur Herstellung eines Verbundwerkstoffes mit einer Zwischenphase aus pyrolytischem Kohlenstoff lamellarer Mikrotextur zwischen Armierungsfasern und Matrix, und nach dem Verfahren erhaltener Werkstoff

Method of making a composite material having a lamellary microtextured pyrolytic carbon interphase between reinforcing fibres and matrix, and material obtained by the process

(84) Etats contractants désignés:
**DE FR GB SE**

(30) Priorité: **24.05.1993 FR 9306139**

(43) Date de publication de la demande:
**30.11.1994 Bulletin 1994/48**

(73) Titulaire:
**SOCIETE EUROPEENNE DE PROPULSION**
**92150 Suresnes (FR)**

(72) Inventeurs:
• **Goujard, Stéphane**
**F-33700 Merignac (FR)**

• **Dupel, Pascal**
**F-33700 Merignac (FR)**
• **Pailler, René**
**F-33610 Cestas (FR)**
• **Bourrat, Xavier**
**F-33200 Bordeaux (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 172 082**

**Description**

La présente invention concerne les matériaux composites comportant un renfort fibreux densifié par une matrice et une interphase lamellaire en carbone pyrolytique (pyrocarbone) entre les fibres du renfort et la matrice.

Un domaine particulier d'application de l'invention est celui des matériaux composites thermostructuraux. Ceux-ci sont caractérisés par des propriétés mécaniques qui les rendent aptes à constituer des éléments de structure et par une capacité à conserver ces propriétés mécaniques jusqu'à des températures élevées. Les matériaux composites thermostructuraux sont utilisés notamment pour réaliser des pièces de moteurs ou de réacteurs, ou des éléments de structure de véhicules spatiaux, exposés à des échauffements importants.

Des exemples de matériaux composites thermostructuraux sont les composites carbone/carbone (C/C) comportant un renfort en fibres de carbone et une matrice en carbone, et les composites à matrice céramique (CMC) comportant un renfort en fibres réfractaires (carbone ou céramique) et une matrice céramique. Des CMC usuels sont les composites C/SiC (renfort en fibres de carbone et matrice en carbure de silicium) et les composites SiC/SiC (renfort en fibres à base de carbure de silicium et matrice en carbure de silicium).

Les matériaux composites dont le renfort est constitué de fibres longues sont connus pour posséder une plus grande ténacité et une plus grande résistance mécanique que les matériaux monolithiques correspondants.

Dans le cas des composites thermostructuraux, il est connu également que l'obtention d'une ténacité plus élevée est favorisée par l'interposition entre les fibres et la matrice d'une interphase qui assure un transfert de charge de la matrice vers la fibre tout en provoquant une déviation des fissures apparaissant dans la matrice lors de sollicitations mécaniques du matériau, pour que les fissures ne se propagent pas aux fibres, et en assurant la relaxation des contraintes résiduelles à fond de fissure.

Pour réaliser ces objectifs, il a été proposé dans le document EP-A-0 172 082 de la demanderesse de former sur les fibres du renfort une interphase ayant une microtexture lamellaire avant densification par la matrice. Cela est réalisé en formant sur les fibres une couche de pyrocarbone (PyC) de type laminaire rugueux ou de nitrure de bore (BN) obtenue par dépôt ou infiltration chimique en phase vapeur. Les empilements de plans atomiques de PyC ou de BN confèrent à l'interphase sa microtexture lamellaire. Dans le matériau final obtenu, lorsqu'une fissure parvient à l'interphase après s'être propagée dans la matrice, son mode de propagation est modifié, de sorte que la fissure est déviée parallèlement aux plans atomiques de l'interphase, donc parallèlement à la fibre, épargnant celle-ci. En outre, en raison de son caractère élastique en cisaillement, l'interphase lamellaire PyC ou BN permet la relaxation des contraintes à fond de fissure. La préservation des fibres dans le matériau fissuré fait que celui-ci conserve son intégrité et ses propriétés mécaniques et présente par conséquent une ténacité beaucoup plus élevée que le matériau de la matrice lorsqu'il est monolithique.

Il est bien connu que la microtexture d'un PyC obtenu par dépôt ou infiltration chimique en phase vapeur dépend des conditions de dépôt ou d'infiltration, notamment de la température et de la pression. Ainsi, selon les conditions, il peut être obtenu des PyC anisotropes (microtexture lamellaire), comme le PyC de type laminaire rugueux ou des PyC peu anisotropes (microtexture non lamellaire) comme le PyC de type laminaire sombre. Or, lors du dépôt d'une interphase PyC, dont l'épaisseur est typiquement de plus d'une centaine de nanomètres, il a été observé que la microtexture du PyC peut évoluer, au sein de l'interphase, du type laminaire rugueux au type laminaire sombre, sans que les conditions de dépôt aient été modifiées. Il résulte de cette évolution non contrôlée que l'interphase ne présente pas la microtexture optimale avec, pour conséquence principale, des propriétés mécaniques, au niveau du matériau composite, inférieures à celles que pourrait laisser prévoir la capacité de renforcement des fibres.

L'invention a donc pour but de fournir un matériau composite comprenant une interphase lamellaire en pyrocarbone entre fibres de renfort et matrice qui a un caractère anisotrope et une microtexture contrôlée.

L'invention a encore pour objet de fournir un procédé permettant d'obtenir un matériau composite avec une interphase pyrocarbone améliorée, ayant une microtexture lamellaire contrôlée, sans nécessiter d'opérations de dépôt longues et coûteuses.

Ces objets sont atteints grâce à un procédé du type comprenant la réalisation d'un renfort fibreux dont les fibres sont munies d'un revêtement d'interphase lamellaire en pyrocarbone anisotrope obtenu par dépôt ou infiltration chimique en phase vapeur, et la densification par une matrice du renfort fibreux muni de l'interphase lamellaire, procédé selon lequel, conformément à l'invention, l'interphase lamellaire en pyrocarbone est formée sur les fibres du renfort à l'intérieur d'une chambre où sont réalisés une pluralité de cycles successifs comprenant chacun : l'introduction d'une phase gazeuse dans laquelle le précurseur du pyrocarbone est choisi parmi les alcanes, à l'exclusion du méthane pris en tant que constituant unique, les alcènes, les alcynes et les hydrocarbures aromatiques et leurs mélanges, le maintien de la phase gazeuse dans la chambre pendant un premier intervalle de temps ayant une durée prédéterminée pour former une couche d'interphase ayant une épaisseur contrôlée de l'ordre du nanomètre, puis l'évacuation des produits de réaction gazeux pendant un deuxième intervalle de temps, les cycles étant réalisés consécutivement dans la chambre jusqu'à obtention de l'épaisseur désirée pour l'interphase, de manière à réaliser une interphase lamellaire en pyrocarbone fortement anisotrope dont la texture en franges de réseau présente des franges ondulées dont la longueur totale est en moyenne au moins égale à 4 nanomètres avec une valeur maximale qui dépasse 10 nanomètres.

Une particularité de l'invention consiste dans la réalisation de l'interphase couche élémentaire par couche élémentaire, chaque couche ayant une épaisseur de l'ordre du nanomètre, c'est-à-dire de préférence inférieure à 10 nanomètres. La microtexture et l'épaisseur de chaque couche peuvent alors être précisément contrôlées par les conditions précises fixées pour le dépôt ou l'infiltration chimique en phase vapeur et sa durée, lors de chaque cycle. Une évolution indésirable de la microtexture de l'interphase, telle qu'elle a pu être observée dans l'art antérieur lorsque l'interphase est formée en une seule opération de dépôt ou infiltration chimique en phase vapeur, est ainsi évitée.

Une autre particularité de l'invention consiste dans la sélection de la phase gazeuse et des conditions de dépôt lors des cycles (température, pression et durées des cycles) pour obtenir un pyrocarbone fortement anisotrope. Des caractéristiques de ce pyrocarbone sont la valeur relativement élevée de la longueur totale de frange dans une couche élémentaire, telle qu'elle sera définie plus loin, et une valeur relativement faible du nombre N de couches élémentaires empilées en cohérence suivant l'axe cristallographique c perpendiculaire à la direction générale des franges dans les plans élémentaires de la texture du pyrocarbone. Cette moindre cohérence colonnaire (axe c) est favorisée par le mode de dépôt en cycles.

Le précurseur de pyrocarbone contenu dans la phase gazeuse est le propane, le propylène ou un mélange de ces deux gaz.

La température de dépôt est de préférence comprise entre 900°C et 1 000°C, la plage 900°C à 950°C convenant plus particulièrement lorsque le gaz précurseur est le propylène et la plage 950°C à 1 000°C lorsque le gaz précurseur est le propane.

La pression est de préférence comprise entre 2 kPa et 5 kPa. Chaque première partie de cycle, au cours de laquelle la phase gazeuse est admise et maintenue dans la chambre jusqu'à obtention d'une couche élémentaire nanométrique, a une durée $D_A$ (palier de dépôt) qui est limitée à quelques secondes ou quelques dizaines de secondes, par exemple comprise entre 2 et 30 secondes. Chaque deuxième partie de cycle, au cours de laquelle les produits gazeux de réaction sont évacués de la chambre, par exemple par pompage ou par balayage par un gaz neutre, a une durée qui n'excède normalement pas une ou plusieurs secondes. Du fait que les cycles se succèdent de façon consécutive, avantageusement sans interruption, et que la durée de chaque cycle est brève, le temps total de formation de l'interphase est relativement court, même lorsque plusieurs dizaines de cycles sont nécessaires.

Les valeurs ci-dessus de température, pression et durée du palier de dépôt sont données pour une installation d'infiltration chimique en phase vapeur dans laquelle la chambre d'infiltration a un volume mort relativement petit, environ égal à 100 cm$^3$. Les valeurs optimales sont susceptibles de varier, selon l'installation utilisée, pour obtenir le pyrocarbone fortement anisotrope désiré, tout en restant vraisemblablement à l'intérieur ou très proches des plages indiquées.

La formation de l'interphase lamellaire sur les fibres du renfort fibreux peut avoir lieu à tout stade de réalisation du renfort, depuis des mèches de fibres jusqu'à une préforme fibreuse multidirectionnelle élaborée ayant une forme correspondant à celle d'une pièce en matériau composite à obtenir, en passant par un stade intermédiaire, par exemple un tissu obtenu par tissage des mèches de fibres. De préférence toutefois, l'interphase est réalisée directement sur la préforme, dernier stade d'élaboration du renfort fibreux, par infiltration chimique en phase vapeur.

L'invention a aussi pour objet un matériau composite, tel qu'obtenu par le procédé défini plus haut, ayant un renfort fibreux densifié par une matrice et un revêtement d'interphase lamellaire en pyrocarbone formé entre les fibres de renfort et la matrice, matériau dans lequel, conformément à l'invention, l'interphase lamellaire est constituée par un pyrocarbone fortement anisotrope dont la texture en franges de réseau 00.2 présente des franges ondulées dont la longueur totale $L_2$ est en moyenne au moins égale à 4 nanomètres avec une valeur maximale qui dépasse 10 nanomètres, et dans laquelle le nombre N de couches élémentaires empilées en cohérence suivant l'axe cristallographique c est en moyenne au plus égal à 4. Ainsi, par rapport à un pyrocarbone de type laminaire rugueux tel qu'obtenu par les procédés de l'art antérieur, l'interphase présente, dans le matériau conforme à l'invention, une organisation latérale plus marquée ($L_2$ plus grande) et une organisation colonnaire (suivant l'axe c) moins marquée (N plus petit). Il en résulte pour l'interphase un caractère lamellaire optimisé vis-à-vis des propriétés recherchées pour cette interphase telles qu'indiquées en tête de la description.

L'invention sera mieux comprise à la lecture de la description et des exemples donnés ci-après à titre indicatif mais non limitatif.

Il sera fait référence aux dessins annexés sur lesquels :

la figure 1 est une vue générale très schématique d'une installation permettant la mise en oeuvre du procédé selon l'invention ;
la figure 2 illustre la variation de pression en fonction du temps au sein de la chambre d'infiltration chimique en phase vapeur de l'installation de la figure 1, lors de la mise en oeuvre du procédé selon l'invention pour la formation de l'interphase pyrocarbone ;
la figure 3 illustre très schématiquement la texture en franges de réseau 00.2 de l'interphase pyrocarbone conforme à l'invention ; et
la figure 4 est une image obtenue par microscopie électronique en transmission montrant une interphase en pyrocarbone à microtexture lamellaire contrôlée, obtenue par un procédé conforme à l'invention.

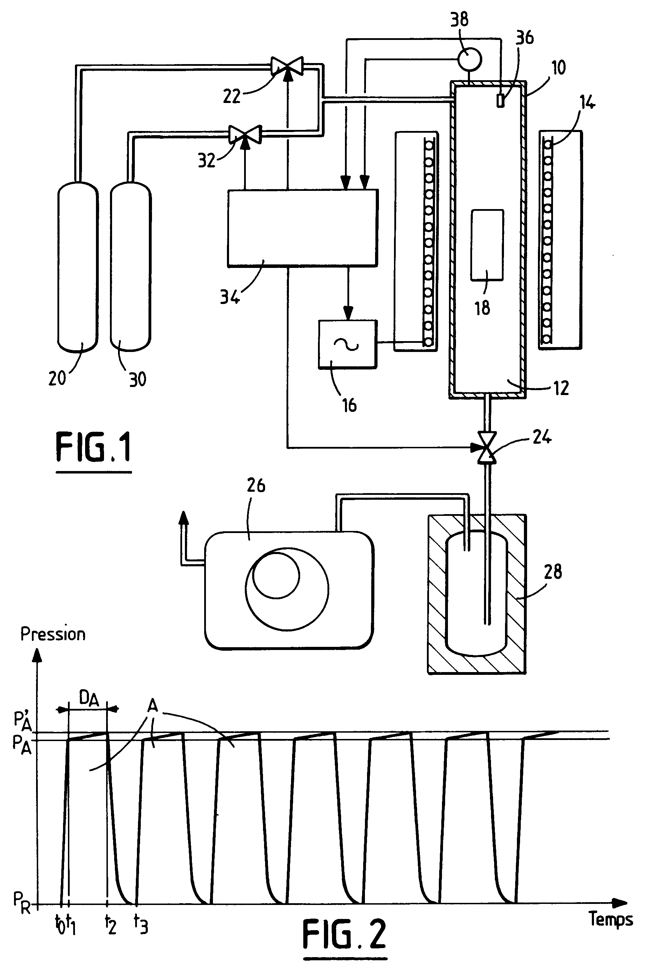

Une installation permettant la mise en oeuvre du procédé conforme à l'invention est illustrée par la figure 1. Cette installation est du type couramment utilisé pour effectuer des opérations d'infiltration chimique en phase vapeur. Elle comprend, de façon connue en soi, un induit 10 en graphite délimitant une chambre de réaction 12. L'induit 10 est entouré d'un inducteur métallique 14 avec interposition d'un isolant thermique. L'ensemble comprenant l'induit 10 et l'inducteur 14 est logé à l'intérieur d'une enceinte étanche, comme décrit par exemple dans le document WO-A-87/04733.

Un substrat fibreux 18, dont les fibres doivent être revêtues d'une interphase pyrocarbone (PyC) à microtexture lamellaire, est disposé dans la chambre 12. Le substrat 18 peut être à l'état de mèches de fibres, fils, tissus ou autres structures bidimensionnelles (nappes de fils ou de câbles unidirectionnels, couches de feutre, ...), ou encore structures tridimensionnelles constituant des préformes de pièces en matériau composite à réaliser conformément à l'invention. L'interphase PyC est formée sur les fibres du substrat 18 par dépôt séquentiel de couches nanométriques. Chaque couche est formée par admission dans la chambre 12 d'une phase gazeuse réactionnelle qui, dans des conditions prédéterminées de pression et de température dans la chambre, donne le dépôt PyC recherché par décomposition de la phase gazeuse au contact des fibres du substrat 18.

La phase gazeuse propre à former le dépôt PyC est admise à la partie supérieure de la chambre 12, à partir d'une source de gaz 20, à travers une vanne d'injection 22.

Après la formation de chaque couche d'interphase, les produits de réaction gazeux, y compris le reliquat de phase gazeuse réactionnelle, sont extraits à la partie inférieure de la chambre 12. L'extraction est réalisée par ouverture d'une vanne d'arrêt 24, ce qui met la chambre 12 en communication avec une pompe à vide 26 à travers un piège à azote liquide 28 permettant de retenir les espèces gazeuses indésirables et d'éviter leur rejet dans le milieu ambiant. L'extraction des gaz de réaction par mise sous vide peut être remplacée ou complétée par un balayage de la chambre 12 par un gaz inerte, tel que l'azote ou l'argon, qui est introduit dans l'enceinte à partir d'une source 30 à travers une vanne d'injection 32.

Les vannes 22, 24 et 32 sont commandées par un automate 34. Celui-ci reçoit en outre des signaux provenant de capteurs 36, 38 et représentatifs de la température et de la pression dans l'enceinte. A partir de ces signaux, l'automate commande une source 16 d'alimentation électrique de l'inducteur 14 pour que règne une température prédéterminée dans la chambre 12, et commande la vanne d'arrêt 24 pour que règne une pression déterminée dans l'enceinte avant chaque admission de phase gazeuse réactionnelle.

Selon une particularité de l'invention, l'interphase lamellaire est réalisée par infiltration chimique en phase vapeur mise en oeuvre de façon pulsée. Chaque couche constitutive de l'interphase est formée au cours d'un cycle comprenant l'introduction de la phase gazeuse réactionnelle et le maintien de cette phase gazeuse pendant une durée prédéterminée (première partie du cycle) et l'extraction des produits de réaction (deuxième partie du cycle). Avantageusement, les cycles se succèdent sans interruption. Il est ainsi possible de réaliser des couches PyC successives d'épaisseur contrôlée de l'ordre du nanomètre (c'est-à-dire inférieure à 10 nanomètres).

Cette succession de cycles est illustrée par la figure 2. Au début d'un cycle A (temps $t_0$), la pression résiduelle dans la chambre est à la valeur $P_R$. L'admission de la phase gazeuse réactionnelle provoque une brusque élévation de la pression dans la chambre. Cette admission est réalisée en commandant l'ouverture de la vanne d'injection 22 par l'automate 34 pendant la durée nécessaire, compte tenu du débit de gaz, pour atteindre dans la chambre 12 une pression désirée $P_A$ (temps $t_1$). Le dépôt d'une couche d'interphase se produit jusqu'au temps $t_2$ auquel la vanne d'arrêt 24 est ouverte par l'automate 34 provoquant l'extraction des produits de réaction et la chute de la pression dans la chambre 12 jusqu'à la valeur $P_R$ à laquelle la pression est maintenue jusqu'au temps $t_3$ de début du cycle suivant. L'intervalle de temps de durée $D_A$ entre les temps $t_1$ et $t_2$ définit le palier de dépôt. A la fin de ce palier, la pression dans la chambre a une valeur $P'_A$.

La durée $D_A$ du palier de dépôt est choisie notamment en fonction de l'épaisseur désirée pour la couche élémentaire. Comme indiqué plus loin, pour la formation d'une couche nanométrique ayant la microtexture ici recherchée, cette durée $D_A$ est de quelques secondes à quelques dizaines de secondes, étant noté que la vitesse de dépôt dépend aussi de la température, de la pression, de la géométrie de la chambre, ...

La durée nécessaire au passage de la pression résiduelle $P_R$ à la pression $P_A$ est généralement de l'ordre de la seconde, ou inférieure à une seconde, tandis que la durée nécessaire à l'extraction des produits de réaction et au retour à la pression $P_R$ est généralement de plusieurs secondes, au plus une dizaine de secondes.

De la sorte, la durée totale d'un cycle (entre les temps $t_0$ et $t_3$) peut être limitée à quelques dizaines de secondes. Ainsi, même lorsque plusieurs dizaines de cycles sont nécessaires pour atteindre l'épaisseur totale désirée pour l'interphase (au minimum 100 nanomètres et généralement plusieurs centaines de nanomètres), la durée totale de formation de l'interphase est relativement courte.

Dans l'exemple illustré par la figure 2, les différents cycles sont identiques, les impulsions de pression dans la chambre ayant même amplitude et même durée. L'interphase est alors formée de couches de même microtexture et de même épaisseur, la brièveté de chaque cycle permettant un contrôle fiable de ces deux caractéristiques.

Toutefois, il est possible de construire une interphase dans laquelle la microtexture et/ou l'épaisseur des couches élémentaires varient de façon contrôlée. Il suffit pour cela de moduler les valeurs de $P_A$ et/ou de $D_A$ sous la commande de l'automate 34. En particulier pour des conditions de température et de pression données conduisant à un pyrocarbone anisotrope conforme à l'invention, une augmentation de durée de palier $D_A$ conduit à l'intérieur d'une couche aux dépôts successifs de pyrocarbone de microtextures différentes (PyC conforme à l'invention + PyC colonnaire).

Selon une caractéristique de la présente invention, les conditions de dépôt de l'interphase PyC sont choisies pour obtenir une microtexture lamellaire fortement anisotrope. A cet effet, il a été déterminé que le gaz précurseur du pyrocarbone, ou gaz source, constituant la phase gazeuse réactionnelle doit être choisi parmi les alcanes, à l'exclusion du méthane pris en tant que constituant unique, les alcènes, les alcynes et les hydrocarbures aromatiques et leurs mélanges. La demanderesse a pu constater que des alcanes tels que le propane et le butane, des alcènes comme le propylène et l'éthylène, des alcynes comme l'acétylène et des hydrocarbures aromatiques tel que le benzène constituaient d'excellents gaz précurseurs.

En outre, avec une installation dans laquelle la chambre de réaction 12 a un volume mort de 100 cm$^3$, les valeurs de la température de dépôt T, de la pression $P_A$ et de la durée $D_A$ du palier de dépôt doivent de préférence être telles que :

$$900°C \leq T \leq 1\,000°C, \; 2\,kPa \leq P_A \leq 5\,kPa, \; et \; 2s \leq D_A \leq 30\,s.$$

Lorsque le gaz précurseur est du propane, la température T doit de préférence être comprise entre 950°C et 1 000°C, tandis qu'avec le propylène elle peut être abaissée à une valeur comprise entre 900°C et 950°C. Lorsqu'une combinaison convenable des paramètres T, $P_A$ et $D_A$ a été déterminée, l'augmentation d'un ou de deux de ces paramètres doit être compensée par la diminution des ou du paramètre(s) restant(s).

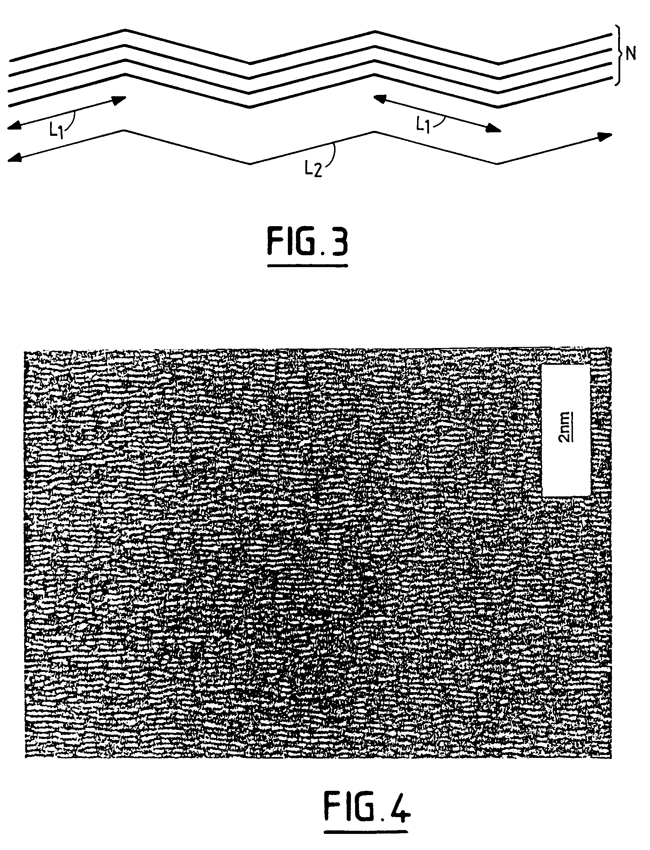

Une caractérisation structurale d'une interphase PyC peut être faite par microscopie électronique en transmission. L'échantillon observé est orienté sous l'angle de Bragg 00.2, permettant d'obtenir l'image des franges de réseau 00.2. La texture en franges de réseau 00.2 peut être caractérisée par des grandeurs $L_1$, $L_2$ et N (figure 3) définies comme suit :

- $L_1$ est la longueur de frange rectiligne qui conserve un contraste élevé; elle est limitée soit par les limites physiques du plan aromatique, soit par les distorsions de celui-ci, telle que variation angulaire ou torsion suivant l'axe parallèle au faisceau d'observation, marquée par une chute de contraste,
- $L_2$ est la longueur de frange totale distordue ou non ; elle est limitée par les limites du plan aromatique que l'on considère correspondre aux chutes totales de contraste,
- N caractérise l'organisation des paquets de couches suivant l'axe cristallographique c ; il correspond au nombre de couches empilées en cohérence (en colonne) en totalité ou en partie seulement.

Cette méthode de caractérisation est connue en soi. On pourra se référer à

A. Oberlin (1989) High resolution TEM studies of carbonization and graphitization, in Chemistry and Physics of carbon, vol. 22 ed. P.A. Thrower, Marcel Dekker, N.Y. & Basel, 1-143,
X. Bourrat (1993) Electrically Conductive grades of carbon blacks : structure and properties, carbon, 31, 2, 287-302,
X. Bourrat, R. Pailler and P. Hanusse (1993) Quantitative analysis of carbon coating anisotropy for CMC interfaces, Proceed. of 21 St Biennial conf. on Carbon, Buffalo, ACS ed.

La figure 3 montre très schématiquement une texture en franges de réseau 00.2 d'une interphase PyC telle qu'obtenue selon l'invention.

Les franges observées ont une forme ondulée avec une longueur $L_2$ relativement grande, tandis que le nombre N de couches empilées en cohérence est relativement petit, conférant au pyrocarbone un caractère fortement anisotrope.

Des exemples de mise en oeuvre du procédé selon l'invention seront maintenant décrits.

Exemple 1

Des fibres en carbure de silicium (en fait de composition Si-C-O) commercialisées sous l'appellation "Nicalon NL-202" par la société japonaise Nippon Carbon sont, sous forme de mèches de fibres, munies d'une interphase à microtexture lamellaire en PyC fortement anisotrope. L'interphase est réalisée de façon pulsée par cycles successifs tels qu'illustrés par la figure 2. L'intervalle de temps séparant l'instant $t_0$ d'introduction de la phase gazeuse réactionnelle - du propane - de l'instant $t_1$ où la pression $P_A$ - environ 3 kPa - est atteinte est approximativement égal à 0,1 s. La durée $D_A$ du palier de dépôt du PyC est d'environ 10 s, la température dans la chambre d'infiltration étant environ égale à 980°C. Enfin, l'intervalle de temps séparant l'instant $t_2$ du début d'extraction des produits de réaction de l'instant $t_3$ de

début du cycle suivant, après retour à la pression $P_R$, est d'environ 2,5 s.

Après formation de l'interphase, les mèches de fibres sont densifiées par une matrice SiC par infiltration chimique en phase vapeur, comme décrit par exemple dans le document FR-A-2 401 888.

Différents échantillons A à E sont réalisés avec des interphases qui diffèrent les unes des autres par le nombre de cycles effectués, donc le nombre de couches élémentaires et, par conséquent, l'épaisseur totale.

Des essais de caractérisation mécanique sont effectués sur les échantillons A à E.

A titre comparatif, des mêmes essais sont effectués sur des échantillons F et G obtenus à partir de mêmes mèches de fibres que celles utilisées pour les échantillons A à E et densifiés par une matrice SiC dans les mêmes conditions que les échantillons A à E ; mais l'échantillon F étant dépourvu d'interphase, et l'échantillon G comprenant une interphase PyC réalisée, comme décrit par exemple dans le document EP-A-0 172 082, en une seule opération continue d'infiltration chimique en phase vapeur avec une phase gazeuse réactionnelle à base de méthane.

Les résultats des mesures effectuées sur les échantillons A à G figurent dans le tableau I, dans lequel :

$\sigma^E$ désigne la contrainte en limite d'élasticité
$\varepsilon^E$ désigne la déformation en limite d'élasticité
$\sigma^R$ désigne la contrainte à rupture en traction
$\varepsilon^R$ désigne l'allongement à rupture en traction, et
E désigne le module d'élasticité apparent.

Tableau I

| Echantillons | Nombre de cycles | Epaisseur de PyC (nm) | $\sigma^E$(MPa) | $\varepsilon^E$(%) | $\sigma^R$(MPa) | $\varepsilon^R$(%) | E(GPa) |
|---|---|---|---|---|---|---|---|
| A | 40 | ≈50 | 216 | 0,18 | 300 | 0,23 | 120 |
| B | 90 | ≈100 | 300 | 0,21 | 470 | 0,56 | 142 |
| C | 150 | ≈150 | 386 | 0,31 | 549 | 0,56 | 124 |
| D | 240 | ≈250 | 387 | 0,26 | 939 | 1,13 | 148 |
| E | 800 | ≈1000 | 221 | 0,21 | 511 | 0,84 | 105 |
| F | - | ≈0 | 110 | 0,08 | 120 | 0,15 | 137 |
| G | - | ≈100 | 153 | 0,11 | 230 | 0,23 | 139 |

Les résultats du tableau I montrent que la réalisation d'une interphase lamellaire à microtexture contrôlée, construite couche nanométrique par couche nanométrique, conformément au procédé de l'invention, permet d'optimiser l'interphase au regard des propriétés mécaniques du composite obtenu. De plus, pour le matériau présentant, parmi les échantillons testés, l'interphase optimale (échantillon D), la valeur de contrainte à rupture en traction mesurée (939 MPa) est proche de la valeur maximale théorique qui peut être attendue des fibres utilisées (1100 MPa), ce qui est loin d'être le cas de la valeur mesurée (230 MPa) pour le composite élaboré avec une interphase PyC conventionnelle.

La figure 4 montre une image obtenue par microscopie électronique en transmission (mode franges de réseau à haute résolution) d'une interphase PyC obtenue selon l'invention sur l'échantillon D. Elle fait apparaître clairement le contrôle presque parfait de la microtexture et son caractère très fortement anisotrope : plans atomiques de grande extension mais faiblement ondulés, empilement régulier des plans, homogénéité de la microtexture à petite échelle (de l'ordre d'un nanomètre) et à grande échelle.

Une caractérisation structurale effectuée comme décrit ci-dessus a donné les résultats suivants :

- $L_1$ en moyenne égale à 1 nanomètre,
- $L_2$ en moyenne supérieure à 4 nanomètres, avec des valeurs maximales supérieures à 10 nanomètres, pouvant atteindre 15 nanomètres, et
- N généralement au plus égal à 4 et en moyenne environ égal à 3.

A titre de comparaison, une caractérisation effectuée de la même façon sur l'interphase PyC de l'échantillon G a donné les résultats suivants :

- $L_1$ en moyenne égale à 0,8 nanomètre,
- $L_2$ en moyenne égale à 2,3 nanomètres avec des valeurs maximales ne dépassant pas 6 nanomètres, et
- N au moins égal à 5.

Par rapport à l'interphase PyC de l'art antérieur, celle obtenue conformément à l'invention est donc caractérisée par une organisation latérale plutôt que colonnaire.

Exemple 2

Des strates bidimensionnelles en tissu de fibres "Nicalon NL-202" de la société japonaise Nippon Carbon ont été revêtues selon le même procédé que celui décrit pour l'échantillon D à l'exemple 1 par un dépôt de PyC de 250 nm, empilées puis densifiées par infiltration chimique en phase vapeur de carbure de silicium, selon le procédé décrit dans le document FR-A-2 401 888. Des éprouvettes de 8 x 1 x 0,5 cm$^3$ ont été découpées (échantillons H) puis testées mécaniquement en traction à température ambiante.

Pour comparaison, des éprouvettes similaires ont été obtenues : soit en remplaçant l'interphase de PyC selon l'invention par une interphase de PyC conventionnelle de 0,1 $\mu$m obtenue par infiltration chimique en phase vapeur classique à partir de méthane (échantillons I), soit en n'interposant pas d'interphase de PyC entre fibres et matrice SiC (échantillons J).

Les résultats des tests mécaniques reportés au tableau II montrent à nouveau l'intérêt des composites à interphase PyC selon l'invention puisque contrainte et déformation à rupture se trouvent augmentées de 80 % et 400 % respectivement vis-à-vis des composites à interphase PyC conventionnelle.et des composites sans interphase.

Tableau II

| Echantillons | $\sigma^E$(MPa) | $\varepsilon^E$(%) | $\sigma^R$(MPa) | $\varepsilon^R$(%) |
|---|---|---|---|---|
| H | 185 | 0,10 | 352 | 1,0 |
| I | 162 | 0,09 | 180 | 0,25 |
| J | 80 | 0,04 | 80 | 0,05 |

Exemple 3

Des fibres de carbone commercialisées sous la référence "T 300" par la société japonaise Toray sont, sous forme de mèches, revêtues d'une interphase de PyC de deux épaisseurs différentes par un procédé selon l'invention, puis densifiées par du carbure de silicium en suivant la procédure décrite à l'exemple 1. Des échantillons K et L sont obtenus avec des interphases ayant respectivement des épaisseurs de 0,5 $\mu$m et de 1 $\mu$m. A titre de comparaison, un échantillon (M) a été réalisé en interposant entre fibres et matrice une interphase de PyC déposé, par infiltration chimique en phase vapeur classique, non cyclique mais à partir de propane.

Les résultats des tests de traction effectués à la température ambiante sur les échantillons K, L et M sont donnés au tableau III. Ils montrent à nouveau que les composites possédant une interphase de PyC selon l'invention ont des propriétés mécaniques améliorées. Ainsi, à épaisseur d'interphase égale, 1 $\mu$m, déposée à partir du même précurseur, le propane, l'échantillon L (à interphase de PyC selon l'invention) présente une résistance et une déformation à rupture améliorées d'environ 50 % par rapport à l'échantillon M (à interphase de PyC conventionnelle). Cet exemple montre que l'amélioration de propriétés résulte au moins en partie de la microtexture contrôlée de l'interphase et de son mode particulier d'élaboration (couche nanométrique par couche nanométrique).

Tableau III

| Echantillons | $\sigma^E$(MPa) | $\varepsilon^E$(%) | $\sigma^R$(MPa) | $\varepsilon^R$(%) | E(GPa) |
|---|---|---|---|---|---|
| K | 150 | 0,11 | 570 | 1,0 | 136 |
| L | 164 | 0,13 | 605 | 1,1 | 126 |
| M | 132 | 0,10 | 416 | 0,78 | 132 |

Exemple 4

Des tissus de fibres "T 300" de la société japonaise Toray sont empilés au sein de deux outillages en graphite pour constituer une préforme puis revêtus, pour un premier lot, d'une interphase de PyC de 500 nm d'épaisseur obtenue selon l'invention, avec les conditions d'infiltration déjà données à l'exemple 1 et, pour un second lot, d'une interphase de PyC de 700 nm d'épaisseur obtenue selon le procédé conventionnel d'infiltration chimique en phase vapeur (la différence d'épaisseur provenant du fait que le contrôle d'épaisseur est plus difficile à réaliser en infiltration classique). Les deux préformes sont densifiées par la matrice SiC selon le procédé d'infiltration en phase vapeur classique. Des éprouvettes sont prélevées dans les deux composites et testées en traction à température ambiante.

Les contraintes à rupture observées sont respectivement de 450 MPa pour le composite à interphase PyC selon l'invention et seulement de 350 MPa pour le composite à interphase PyC conventionnelle. Ce nouvel exemple montre l'avantage de l'interphase obtenue selon l'invention, en dépit du fait que son épaisseur est plus faible (il est admis que, dans les composites C/SiC, l'épaisseur optimale de l'interphase PyC se situe vers 1 $\mu$m).

**Revendications**

1. Procédé de fabrication d'un matériau composite par densification par une matrice d'un renfort fibreux dont les fibres sont munies d'un revêtement d'interphase lamellaire en pyrocarbone anisotrope obtenu par dépôt ou infiltration chimique en phase vapeur,
caractérisé en ce que l'interphase lamellaire en pyrocarbone est formée sur les fibres du renfort à l'intérieur d'une chambre où sont réalisés une pluralité de cycles successifs comprenant chacun : l'introduction d'une phase gazeuse réactionnelle dans laquelle le précurseur du pyrocarbone est choisi parmi les alcanes, à l'exclusion du méthane pris en tant que constituant unique, les alcènes, les alcynes et les hydrocarbures aromatiques et leurs mélanges, le maintien de la phase gazeuse dans la chambre pendant un premier intervalle de temps ayant une durée prédéterminée pour former une couche d'interphase ayant une épaisseur contrôlée de l'ordre du nanomètre, puis l'évacuation des produits de réaction gazeux pendant un deuxième intervalle de temps, les cycles étant réalisés consécutivement dans la chambre jusqu'à obtention de l'épaisseur désirée pour l'interphase, de manière à réaliser une interphase lamellaire fortement anisotrope dont la texture en franges de réseau présente des franges ondulées dont la longueur totale est au moins égale en moyenne à 4 nanomètres avec des valeurs maximales qui dépassent 10 nanomètres.

2. Procédé selon la revendication 1, caractérisé en ce que l'épaisseur de chaque couche d'interphase est inférieure à 10 nanomètres.

3. Procédé selon l'une quelconque des revendications 1 et 2, caractérisé en ce que le dépôt de chaque couche d'interphase est réalisé à une température comprise entre 900°C et 1 000°C, sous une pression comprise entre 2 kPa et 5 kPa et avec un maintien de la phase gazeuse dans la chambre d'une durée comprise entre 2 et 30 secondes.

4. Procédé selon la revendication 3, caractérisé en ce que le précurseur du pyrocarbone est le propane et la température de dépôt est comprise entre 950°C et 1 000°C.

5. Procédé selon la revendication 3, caractérisé en ce que le précurseur du pyrocarbone est le propylène et la température de dépôt est comprise entre 900°C et 950°C.

6. Matériau composite comprenant un renfort fibreux densifié par une matrice et un revêtement d'interphase lamellaire en pyrocarbone anisotrope formé entre les fibres du renfort et la matrice,
caractérisé en ce que l'interphase lamellaire est constituée par un pyrocarbone fortement anisotrope dont la texture en franges de réseau 00.2 présente des franges ondulées dont la longueur totale $L_2$ est en moyenne au moins égale à 4 nanomètres avec une valeur maximale qui dépasse 10 nanomètres, et dans laquelle le nombre N de couches élémentaires empilées en cohérence suivant l'axe cristallographique c est en moyenne au plus égal à 4.

**Claims**

1. A method of manufacturing a composite material in which fiber reinforcement is densified by means of a matrix, the fibers being provided with a lamellar interphase coating of anisotropic pyrolytic carbon obtained by chemical vapor infiltration or deposition,
characterised in that the pyrolytic carbon lamellar interphase is formed on the fibers of the reinforcement inside a chamber in which a plurality of successive cycles is performed, each cycle comprising: injecting a reaction gaseous phase in which the pyrolytic carbon precursor is selected from alkanes, excluding methane taken as a sole component, alkenes, alkynes, and aromatic hydrocarbons, and mixtures thereof; maintaining the gaseous phase inside the chamber for a first time period of predetermined time duration to form an interphase layer of controlled thickness of nanometer size; and evacuating the gaseous reaction products during a second time period; the cycles being performed consecutively in the chamber until the thickness desired for the interphase has been obtained, thereby achieving a lamellar interphase that is highly anisotropic, whose lattice fringe texture has distorted fringes of total length not less than 4 nanometers on average with maximum values exceeding 10 nanometers.

2. A method according to claim 1, characterised in that the thickness of each interphase layer is less than 10 nanometers.

3. A method according to any one of claims 1 and 2, characterised in that each interphase layer is deposited at a temperature lying in the range 900°C to 1,000°C, at a pressure lying in the range 2 kPa to 5 kPa, with the gaseous phase being maintained inside the chamber for a time duration lying in the range 2 seconds to 30 seconds.

4. A method according to claim 3, characterised in that the pyrolytic carbon precursor is propane and the deposition temperature lies in the range 950°C to 1,000°C.

5. A method according to claim 3, characterised in that the pyrolytic carbon precursor is propylene and the deposition temperature lies in the range 900°C to 950°C.

6. A composite material comprising a fiber reinforcement densified by a matrix and a lamellar interphase coating of anisotropic pyrolytic carbon formed between the fibers of the reinforcement and the matrix,
characterised in that the lamellar interphase is constituted by a highly anisotropic pyrolytic carbon whose 00.2 lattice fringe texture has distorted fringes of total length $L_2$ that is on average not less than 4 nanometers with a maximum value that exceeds 10 nanometers, and in which the number N of elementary layers stacked coherently along the $\underline{c}$ crystallographic axis is on average not more than 4.

**Patentansprüche**

1. Verfahren zur Herstellung eines Verbundmaterials durch Verdichten einer faserigen Verstärkung, deren Fasern mit einer durch Abscheidung oder chemische Infiltration in der Gasphase erhaltenen lamellaren Zwischenphasen-Beschichtung aus anisotropem Pyrokohlenstoff versehen sind, mittels einer Matrix,
dadurch gekennzeichnet, daß die lamellare Zwischenphase aus Pyrokohlenstoff auf den Fasern der Verstärkung im Inneren einer Kammer ausgebildet wird, wo eine Mehrzahl aufeinander folgender Zyklen durchgeführt wird, von denen jeder aufweist:
Einführen einer Reaktions-Gasphase, in der der Vorläufer des Pyrokohlenstoffs ausgewählt ist unter den Alkanen, wobei Methan als alleiniger Bestandteil ausgenommen ist, den Alkenen, den Alkinen und den aromatischen Kohlenwasserstoffen und ihren Gemischen,
Halten der Gasphase in der Kammer während eines ersten Zeitraums mit einer vorbestimmten Dauer, um eine Zwischenphasen-Schicht mit einer kontrollierten Dicke im Nanometer-Bereich auszubilden,
dann Evakuieren der gasförmigen Reaktionsprodukte während eines zweiten Zeitraums,
wobei die Zyklen in der Kammer aufeinanderfolgend durchgeführt werden bis zur Erhaltung der für die Zwischenphase gewünschten Dicke, um eine stark anisotrope lamellare Zwischenphase herzustellen, deren Netzebenen-Linienstruktur gewellte Linien zeigt, deren Gesamtlänge im Mittel mindestens gleich 4 Nanometer ist mit Maximalwerten, die über 10 Nanometer hinausgehen.

2. Verfahren nach Anspruch 1, dadurch gekennzeichnet daß die Dicke jeder Zwischenphasen-Schicht geringer ist als 10 Nanometer.

3. Verfahren nach Anspruch 1 oder 2, dadurch gekennzeichnet, daß die Abscheidung jeder Zwischenphasen-Schicht bei einer Temperatur zwischen 900°C und 1000°C, unter einem Druck zwischen 2 kPa und 5 kPa und mit einem Halten der Gasphase in der Kammer für eine Dauer zwischen 2 und 30 Sekunden durchgeführt wird.

4. Verfahren nach Anspruch 3, dadurch gekennzeichnet, daß der Vorläufer des Pyrokohlenstoffs Propan ist und die Temperatur der Abscheidung zwischen 950°C und 1000°C beträgt.

5. Verfahren nach Anspruch 3, dadurch gekennzeichnet, daß der Vorläufer des Pyrokohlenstoffs Propylen ist und die Temperatur der Abscheidung zwischen 900°C und 950°C beträgt.

6. Verbundmaterial aufweisend eine mit einer Matrix verdichtete, faserige Verstärkung und eine zwischen den Fasern der Verstärkung und der Matrix ausgebildete lamellare Zwischenphasen-Beschichtung aus Pyrokohlenstoff, dadurch gekennzeichnet, daß die lamellare Zwischenphase aus einem stark anisotropen Pyrokohlenstoff gebildet ist, dessen Linienstruktur der Ebene 00.2 gewellte Linien zeigt, deren Gesamtlänge $L_2$ im Mittel mindestens gleich 4 Nanometer ist mit einem Maximalwert, der über 10 Nanometer hinausgeht, und in der die Anzahl N der elementaren Schichten, die entlang der kristallographischen c-Achse zusammenhängend gestapelt sind, im Mittel höchstes gleich vier ist.

## FIG.1

## FIG.2

FIG.3

FIG.4